Europäisches Patentamt

European Patent Office

Office européen des brevets

(11) Veröffentlichungsnummer: **0 001 589**
**B1**

## (12) EUROPÄISCHE PATENTSCHRIFT

(45) Veröffentlichungstag der Patentschrift: 15.07.81

(21) Anmeldenummer: 78101060.8

(22) Anmeldetag: 04.10.78

(51) Int. Cl.³: **C 01 B 25/06, C 07 F 9/50**
**//C01B33/28, B01D53/02**

(54) Verfahren zur Wiedergewinnung von Phosphan und Methylphosphan.

(30) Priorität: 19.10.77 DE 2746910

(43) Veröffentlichungstag der Anmeldung:
02.05.79 Patentblatt 79/9

(45) Bekanntmachung des Hinweises auf die Patenterteilung:
15.07.81 Patentblatt 81/28

(84) Benannte Vertragsstaaten:
BE CH DE FR GB NL

(56) Entgegenhaltungen:
DE - A - 2 264 512
DE - B - 2 208 214
US - A - 3 982 912

Chemical Abstracts, vol. 82, no. 13, 31 March
1975 Columbus, Ohio, USA
O.D. TKACH "Adsorptive power of some
adsorbents as regards phosphine", Seite 391,
Spalte 2, Abstract Nr. 103 609 c

Chemical Abstracts, vol. 84, 14 June to 28 June
1976 Columbus, Ohio, USA
A. YUSA et al "Ultrahigh purification of silane for
semiconductor silicon", Seite 565, linke Spalte,
Abstract nr. 17269h

Chemical Abstracts, vol. 86, 28 February to 14
March 1977, Columbus, Ohio, USA
O.D. TKACH et al "Adsorption of phosphine and
hydrogen sulfide by activated carbons and other
adsorbents", Abstract Nr. 57 500t

Donals W., Breck T. "Zedite Molecular Sieves",
1974, Seiten 348—352, 636

(73) Patentinhaber: HOECHST AKTIENGESELLSCHAFT
Postfach 80 03 20
D-6230 Frankfurt/Main 80 (DE)

(72) Erfinder: Jödden, Klaus, Dr.
Alleestrasse 44
D-5030 Hürth-Knapsack (DE)
Erfinder: Heymer, Gero, Dr.
Fasanenaue 12
D-5042 Erftstadt 1 (DE)
Erfinder: Klose, Werner, Dr.
Grachtstrasse 14
D-5042 Erftstadt 1 (DE)

## Verfahren zur Wiedergewinnung von Phosphan und Methylphosphan

Die vorliegende Erfindung betrifft ein Verfahren zur Wiedergewinnung von Phosphan, Methylphosphan oder Gemischen dieser beiden Phosphane, aus einem Abfallgasgemisch, das neben diesen Phosphanen noch Wasserstoff, Stickstoff und unpolare, niedere Kohlenwasserstoffe, einzeln oder im Gemisch, enthält.

Üblicherweise trennt man Phosphane aus Gasgemischen dadurch, ab, daß man die Phosphane aus den Gasgemischen, insbesondere solchen, die Wasserstoff enthalten, herauskondensiert. Solche Kondensationsverfahren, bei denen im Falle von $PH_3$ Temperaturen von $-120$ bis $-130°C$ erreicht werden müssen, sind sehr kostenintensiv.

Aus diesem Grunde sind solche Kondensationsverfahren nicht anwendbar, wenn die Phosphane aus Abfallgasgemischen gewonnen werden sollen, die nur eine geringe Phosphankonzentration besitzen, so daß diese Abfallgasgemische in der Regel vernichtet werden müssen.

Aus der US—PS 3,982,912 ist bereits bekannt, Gemische von Silan und Phosphan mit Hilfe von Zeolithen zu trennen. Hierbei werden Zeolithe des K—A—Typs eingesetzt, welche, aus üblichen A—Typ—Zeolithen dadurch gewonnen werden, daß man von deren austauschbaren Kationen 33,3 bis 83,3% durch Kalium- und etwa 17,7 bis 66,7% durch Zinkionen ersetzt.

Auch in der DE—PS 22 08 214 wurde bereits auf die gute Adsorption dieser, auf besondere Weise hergestellten K—A—Zeolithe hingewiesen.

Der Nachteil dieser bekannten Arbeitsweisen ist, daß sie eine spezielle Vorbehandlung der handelsüblichen Zeolithe voraussetzen, daß sie lediglich auf die Trennung von Silan-Phosphan-Gemischen beschränkt sind und sich nicht ohne weiteres auf andere Phosphan-Gas-Gemische übertragen lassen, da die Trennwirkung dieser Zeolithe stark von der Zusammensetzung (Verhältnis $K^+ : Zn^{2+}$) abhängt.

In "Chemical. Abstracts", Band 82, Nr. 13, Seite 391, Abstract Nr. 103609c ist zwar bereits die Adsorption von $PH_3$ an Zeolithen beschrieben worden, doch ist dieser Schrifttumsstelle zu entnehmen, daß nicht näher definierte Zeolithe vom Typ Na—A entsprechend einer empirischen Formel lediglich geringe Mengen $PH_3$ adsorbieren, während sich mit anderen Adsorbentien wesentlich bessere Ergebnisse erzielen lassen. Eine technische Lehre zur Wiedergewinnung von Phosphan und/oder Methylphosphan in praktisch reiner Form aus Abfallgasgemischen kann der Fachmann dieser Literaturstelle nicht entnehmen, zumal zu erwarten war, daß auch andere Kompenenten aus diesen Gasgemischen von den Zeolithen adsorbiert werden würden.

Die Adsorption von Methylphosphan an Zeolithen war bislang völlig unbekannt.

Bei der kontinuierlichen Herstellung von $PH_3$ aus gelbem Phosphor und Natronlauge entsteht in einer Nachreaktion ein $H_2$-reiches $PH_3$, da das entstandene Hypophosphit neben der Disproportionierung in $PH_3$ und Phosphit mit $H_2O$ zu Phosphit und Wasserstoff reagiert.

Aus diesem, nur relativ wenig $PH_3$-enthaltenden, Phosphan-Wasserstoff-Gemisch das Phosphan in konzentrierter und reiner Form zu gewinnen, bereitete bisher große Schwierigkeiten.

Aufgabe der vorliegenden Erfindung war es, einen Weg zu finden, Phosphan und/oder Methylphosphan aus Abfallgasgemischen, die Wasserstoff, Stickstoff und/oder unpolare niedere Kohlenwasserstoffe enthalten, in reiner Form wiederzugewinnen, wobei diese Gasgemische die Phosphane in nur relativ geringen Mengen enthalten.

Überraschenderweise wurde nun gefunden, daß sich diese Aufgabe lösen läßt, wenn man das Abfallgasgemisch bei Temperaturen zwischen $-20°C$ und $+30°C$, vorzugsweise bei Raumtemperatur, mit nicht vorbehandelten Zeolithen des Typs Na—A in Kontakt bringt, die eine Porengröße von $5 . 10^{-8}$ bis $15 . 10^{-8}$ cm aufweisen, wobei die genannten Phosphane an den Zeolithen bis zu deren Sättigung adsorbiert und vom Rest des Abfallgases abgetrennt werden, worauf man die Zeolithe auf 180 bis 230°C erhitzt und die dabei desorbierenden Phosphane in praktisch reiner Form auffängt.

Insbesondere wird ein Abfallgasgemisch eingesetzt, das 1 bis maximal 70 Vol% der genannten Phosphane enthält.

Als Zeolithe eignen sich handelsübliche Zeolithe der genannten Art.

Nach Adsorption der Phosphane erhitzt man die Zeolithe zur Desorption zweckmäßigerweise auf 180 bis 200°C.

Unter unpolaren niederen Kohlenwasserstoffen sind insbesondere solche mit 1 bis 4 C-Atomen zu verstehen.

Als Zeolithe eignen sich insbesondere solche vom Typ Na—A mit einer Porenweite von 5 Å und einem Al/Si-Verhältnis von 0.9 bis 1.1 und einem Na/Ca-Verhältnis von 0.6 bis 1.1. Ebenso sind Zeolithe von Typ Na—A mit einer Porenweite von 10 Å und einem Al/Si-Verhältnis von 0.6 bis 0.9 und einem Na/Ca-Verhältnis von 15 bis 20 verwendbar.

Nachden das Ausgangsgemisch mit dem Zeolith in Kontakt gebracht worden ist, enthält das verbleibende Restgas nur noch Spuren von $PH_3$ bzw. $CH_3PH_2$ (0,02 Vol%). Auch das steile Durchbruchsverhalten bei Sättigung weist auf eine gute Adsorptionkapazität für $PH_3$ und

CH$_3$PH$_2$ hin. Die Beladungskapazität beträgt bei —20°C 130 g PH$_3$/kg Zeolith bzw. 180 g CH$_3$PH$_2$/kg Zeolith, bei +20°C 100 g PH$_3$/kg Zeolith bzw. 155 g CH$_3$PH$_2$/kg Zeolith, unabhängig von der Zusammensetzung des Gasgemisches. Enthält das zu trennende Gemisch Phosphan und Methylphosphan, so werden beide Gase gleichzeitig adsorbiert. Deren Trennung ist durch nachfolgende Desorption und Kondensation des Methylphosphans bei Temperaturen von —30 bis —80°C oder durch Absorption in konzentrierter Salzsäure leicht möglich.

Wasserdampft, der im Gasgemisch entsprechend dem Wasserdampfpartialdruck vorliegt, wird ebenfalls adsorbiert, ohne daß die Beladungskapazität bezüglich PH$_3$ oder CH$_3$PH$_2$ während eines Adsorptionsvorganges merklich beeinträchtigt wird.

Nach Behandlung der Zeolithe mit PH$_3$ und/oder CH$_3$PH$_2$ kann sofortige Desorption durch Aufheizen der Zeolithe bis auf 180 bis 230°C erfolgen. Dabei wird das adsorbierte Gas kontinuierlich freigesetzt. Oberhalb 200°C ist der Zeolith weitgehend frei von PH$_3$ bzw. CH$_3$PH$_2$ und kann nach Abkühlen auf Raumtemperatur erneut beladen werden. Das so zurückgewonnene Phosphan bzw. Methylphosphan ist sehr rein (99,0 Vol%), unabhängig von der zusammensetzung des Ausgangsgemisches.

Wie eine Serie von Adsorptions- und Desorptionsschritten zeigte, ist das erfindungsgemäße Verfahren reproduzierbar bezüglich seiner Kapazität und seinem Trenneffekt. Ebenso wurde in einem Langzeitversuch sichergestellt, daß Phosphan in adsorbiertem Zustand über längere Zeit stabil ist.

### Beispiel 1

390 g Zeolith A (5 Å, Perlform 2 mm, Schüttgewicht 760 g/l, getrocknet bei 300°C) wurden in einer Glassäule mit Doppelmantel unter Stickstoff auf —20°C gekühlt (Methanol-Trockeneis-Mischung als zirkulierende Kühlflüssigkeit).

Anschließend wurde die Säule solange mit PH$_3$ beladen, bis merkliche Mengen in den nachgeschalteten Brenner gelangten. Infolge der Adsorptionswärme stieg die Temperatur an der Adsorptionsfront auf +20°C bis 30°C. Nach Ablassen der Kühlflüssigkeit wurde der Zeolith mittels einer zirkulierenden Heizflüssigkeit auf 200°C aufgeheizt, wobei kontinuierlich PH$_3$ friegesetzt wurde. Die adsorbierte Menge PH$_3$ wurde durch Differenzwägung der Vorratsstahlflasche bestimmt, das Volumen des desorbierten Gases durch eine Gasuhr gemessen und nach Umrechnung mit der adsorbierten Menge PH$_3$ verglichen. Dabei zeigte sich, daß 90 bis 95% des adsorbierten PH$_3$ bei 200°C durch Desorption freigesetzt wurden.

### Beispiel 2

Entsprechend Beispiel 1 wurde Methylphosphan an 440 g Zeolith A mit einer Porengröße von 10. 10$^{-8}$ cm bei —16°C adsorbiert. Die adsorbierte Menge CH$_3$PH$_2$ betrug 74 g.

### Beispiel 3

Zur trennung eines PH$_3$/H$_2$-Gemisches wurde eine Gasmischung von 85 Vol% H$_2$ mit 15 Vol% PH$_3$ nach Beispiel 1 bei Raumtemperatur mit dem Zeolith in Kontakt gebracht. Gaszusammensetzung nach Passieren der mit dem Zeolith gefüllten Adsorptionssäule:

99,9   Vol% H$_2$

0,02   Vol% PH$_3$

Zusammensetzung des von Zeolith durch Erhitzen wieder desorbierten Gases:

99,8   Vol% PH$_3$

0,2   Vol% H$_2$

### Beispiel 4

Ein PH$_3$/CH$_4$/N$_2$-Gemisch mit 64 Vol% CH$_4$, 32 Vol% PH$_3$, 4 Vol% N$_2$ wurde gemäß Beispiel 1 bei Raumtemperatur getrennt. Gaszusammensetzung nach Passieren der Adsorptionssäule:

94,1   Vol% CH$_4$

5,8   Vol% N$_2$

0,02   Vol% PH$_3$

Zusammensetzung des desorbierten Gases:

99,0   Vol% PH$_3$

0,04   Vol% CH$_4$.

### Patentansprüche

1. Verfahren zur Wiedergewinnung von Phosphan, Methylphosphan oder Gemischen dieser beiden Phosphane, aus einem Abfallgasgemisch, das neben diesen Phosphanen noch Wasserstoff, Stickstoff und unpolare Kohlenwasserstoffe mit 1—4 C-Atomen, einzeln oder im Gemisch, enthält, dadurch gekennzeichnet, daß man das Abfallgemisch bei Temperaturen zwischen —20 und +30°C mit nicht vorbehandelten Zeolithen des Typs Na—A in Kontakt bringt, die eine Porengröße von 5 · 10$^{-8}$ bis 15 · 10$^{-8}$ cm aufweisen, wobei die genannten Phosphane an den Zeolithen bis zu deren Sättigung absorbiert und vom Rest des Abfallgases abgetrennt werden, worauf man die Zeolithe auf 180 bis 230°C erhitzt und die dabei desorbierenden Phosphane in praktisch reiner Form auffängt.

2. Verfahren nach Anspruch 1, dadurch gekennzeichnet, daß ein Abfallgasgemisch eingesetzt wird, das 1 bis maximal 70 Vol% der genannten Phosphane enthält.

3. Verfahren nach Anspruch 1 oder 2, dadurch gekennzeichnet, daß man des Abfallgasgemisch bei Raumtemperatur mit den Zeolithen in Kontakt bringt.

4. Verfahren nach einem der Ansprüche 1 bis 3, dadurch gekennzeichnet, daß man als Zeolithe solche vom Typ Na—A einsetzt.

5. Verfahren nach einem der Ansprüche 1 bis 4, dadurch gekennzeichnet, daß man Zeolithe einsetzt, die eine Porengröße zwischen 5 . 10⁻⁸ bis 10 . 10⁻⁸ cm aufweisen.

6. Verfahren nach einem der Ansprüche 1 bis 5, dadurch gekennzeichnet, daß man nach Absorption der Phosphane die Zeolithe zur Desorption auf 180 bis 200°C erhitzt.

7. Verfahren nach einem der Ansprüche 1 bis 6, dadurch gekennzeichnet, daß ein Abfallgasgemisch eingesetzt wird, das als unpolare, niedere Kohlenwasserstoffe solche mit 1 bis 4 C-Atomen enthält.

## Claims

1. A process for recovering phosphane, methylphosphane or a mixture of these two phosphanes from a waste gas mixture containing these phosphanes together with hydrogen, nitrogen and nonpolar lower hydrocarbons with 1 to 4 carbon atoms, alone or in combination which comprises: contacting the waste gas mixture at temperatures within the range $-20$ to $+30°C$ with unpretreated Na—A grade zeolites having a pore size of $5 \times 10^{-8}$ to $15 \times 10^{-8}$ cm; the phosphanes being absorbed by the zeolites until these latter are saturated therewith and separated from the remainder of the waste gas mixture; heating the zeolites to 180 to 230°C and collecting the desorbing phosphanes practically in pure form.

2. Process as claimed in claim 1, wherein the waste gas mixture contains 1 up to at most 70 volume % of said phosphanes.

3. Process as claimed in claim 1 or 2, wherein the waste gas mixture is contacted with the zeolites at room temperature.

4. Process as claimed in any of claims 1 to 3, wherein the zeolites are Na—A grade zeolites.

5. Process as claimed in any of claims 1 to 4, wherein the zeolites have a pore size of $5 \times 10^{-8}$ to $10 \times 10^{-8}$ cm.

6. Process as claimed in any of claims 1 to 5, wherein after phosphane absorption the zeolites are heated to 180 to 200°C for desorption.

7. Process as claimed in any of claims 1 to 6, wherein the waste gas mixture contains $C_1$—$C_4$ hydrocarbons as the nonpolar lower hydrocarbons.

## Revendications

1. Procédé de récupération de phosphine, de méthylphosphine ou de mélanges de ces deux phosphines à partir d'un mélange de gaz résiduaires contenant, outre ces phosphines, de l'hydrogène, de l'azote et des hydrocarbures en $C_1$—$C_4$ non polaires seuls ou en combinaison, caractérisé en ce que l'on met en contact le mélange de gaz résiduaires à des températures comprises entre $-20$ et $+30°C$ avec des zéolithes d'une dimension de pores égale à $5 \times 10^{-8}$ à $15 \times 10^{-8}$ cm, lesdites phosphines étant adsorbées par les zéolithes jusqu'à saturation de ces dernières et séparées du reste du gaz résiduaire, puis on porte les zéolithes à 180—230°C et on recueille les phosphines qui se désorbent pratiquement à l'état pur.

2. Procédé selon la revendication 1, caractérisé en ce que l'on utilise un mélange de gaz résiduaires contenant 1 à 70% en volume au maximum desdites phosphines.

3. Procédé selon la revendication 1 ou 2, caractérisé en ce que l'on met le mélange de gaz résiduaires en contact avec les zéolithes à la température ambiante.

4. Procédé selon l'une quelconque des revendications 1 à 3, caractérisé en ce que l'on utilise des zéolithes du type Na—A.

5. Procédé selon l'une quelconque des revendications 1 à 4, caractérisé en ce que l'on utilise des zéolithes présentant une dimension de pores comprise entre $5 \times 10^{-8}$ à $10 \times 10^{-8}$ cm.

6. Procédé selon l'une quelconque des revendications 1 à 5, caractérisé en ce qu'après absorption des phosphines, on porte les zéolithes à 180—200°C pour la désorption.

7. Procédé selon l'une quelconque des revendications 1 à 6, caractérisé en ce que l'on utilise un mélange de gaz résiduaires contenant des hydrocarbures en $C_1$—$C_4$ comme hydrocarbures inférieurs non polaires.